# EUROPEAN PATENT SPECIFICATION

(11) **EP 2 418 787 B1**
(45) Date of publication and mention of the grant of the patent: **11.01.2017**
(21) Application number: 10748500.5
(22) Date of filing: 02.03.2010
(51) Int. Cl.: H04B 10/077, H04J 14/02, H04B 10/079

(54) **METHOD OF ASSESSING FAILURE IN TRANSMISSION PATH OPTICAL FIBER, AND APPARATUS OF SAME**
VERFAHREN ZUR FEHLERBESTIMMUNG IN EINER ÜBERTRAGUNGSWEG-GLASFASER UND VORRICHTUNG DAFÜR
PROCÉDÉ D'ÉVALUATION DE PANNE DANS UNE FIBRE OPTIQUE DE CHEMIN DE TRANSMISSION ET APPAREIL ASSOCIÉ

(30) Priority: 04.03.2009 JP 2009050861
(43) Date of publication of application: 15.02.2012
(73) Proprietor: NEC Corporation, Tokyo 108-8001 (JP)
(72) Inventor: SATOU, Yoshirou, Tokyo 108-8001 (JP)
(74) Representative: Ilgart, Jean-Christophe
(86) International application number: PCT/JP2010/001420
(87) International publication number: WO 2010/100901

(56) References cited:
- JP-A- 5 244 098
- JP-A- 5 292 083
- JP-A- 6 037 717
- JP-A- 10 262 030
- JP-A- 10 303 863
- JP-A- 2001 007 829
- US-A- 5 867 289
- US-B1- 6 718 141

## Description

### FIELD OF THE INVENTION

The present invention relates to a method of assessing a failure in a transmission path optical fiber and an apparatus for the same. More particularly, the present invention relates to a method of assessing a failure in a transmission path optical fiber and an apparatus for the same, which assess the failure in the transmission path optical fiber in a short time in a WDM apparatus by transmitting a SV signal in which wavelength reception discontinuity information and SV wavelength reception discontinuity information of its own station are carried from the WDM apparatus of its own station in an OADM system and also collecting wavelength reception discontinuity information and SV wavelength reception discontinuity of other stations in the WDM apparatus.

### BACKGROUND ART

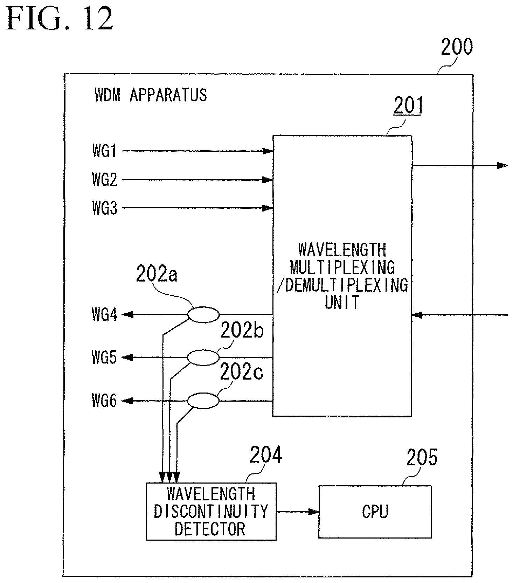

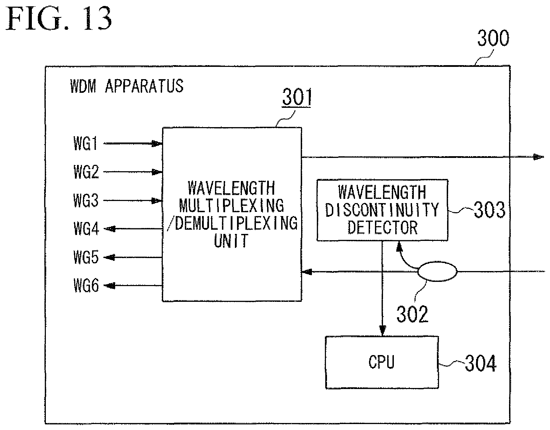

Conventionally, an apparatus for assessing a failure in a transmission path optical fiber in an OADM (optical add/drop multiplexer) system assesses only a discontinuity failure of a wavelength input to its own station in an optical wavelength inserting/branching apparatus, that is, a WDM (wavelength division multiplex) apparatus, as shown in FIGS. 12 and 13.

A WDM apparatus 200 shown in FIG. 12 has a wavelength multiplexing/demultiplexing unit 201. The wavelength multiplexing/demultiplexing unit 201 wavelength-multiplexes wavelength groups WG1, WG2, and WG3 and wavelength-demultiplexes wavelength groups WG4, WG5, and WG6. Branching units 202a, 202b, and 202c are provided on lines of the wavelength groups WG4, WG5, and WG6. The branching units 202a, 202b, and 202c are connected to a wavelength discontinuity detector 204. The wavelength discontinuity detector 204 detects the presence/absence of wavelengths of the wavelength groups WG4, WG5, and WG6. A detection signal of the wavelength discontinuity detector 204 is input to a CPU 205, so that wavelength reception discontinuity is assessed.

A WDM apparatus 300 shown in FIG 13 has a wavelength multiplexing/demultiplexing unit 301. As in the configuration of FIG 12 described above, the wavelength multiplexing/demultiplexing unit 301 wavelength-multiplexes wavelength groups WG1, WG2, and WG3, and wavelength-demultiplexes wavelength groups WG4, WG5, and WG6. A branching unit 302 is provided on a line of a supervisory control signal, that is, an SV signal (supervisory signal) output from the wavelength multiplexing/demultiplexing unit 301. The branching unit 302 is connected to a wavelength discontinuity detector 303. The wavelength discontinuity detector 303 detects the presence/absence of wavelengths of the wavelength groups WG4, WG5, and WG6. A detection signal of the wavelength discontinuity detector 303 is input to a CPU 304, so that wavelength reception discontinuity is assessed.

As a method of checking a failure in a transmission path optical fiber in the OADM system, an OTDR (optical time delay refrectometer) method using an SV signal of a plurality of wavelengths or a single wavelength has been proposed in Patent Documents 1 and 2.

### [Prior Art Documents]

### [Patent Documents]

[Patent Document 1] Japanese Unexamined Patent Application, First Publication No. H10-262030
[Patent Document 2] Japanese Unexamined Patent Application, First Publication No. 2006-211639

US 6 718 141 discloses an optical network using WDM techniques and a method for identifying and isolating faults along the network.

### SUMMARY OF THE INVENTION

### Problem to be Solved by the Invention

However, the following problems arise if the assessment of a discontinuity failure of a wavelength input to its own station in a WDM apparatus of the related art is applied to the OADM system although a failure in a transmission path optical fiber can be assessed in a one-to-one facing state.

The first problem is that wavelength reception discontinuity information and SV wavelength reception discontinuity information of its own station are not periodically transmitted to other stations because the WDM apparatus does not have a function of transmitting wavelength discontinuity information of a signal wavelength and an SV wavelength by the SV wavelength.

The second problem is that wavelength reception discontinuity information and SV wavelength reception discontinuity information of other stations are not periodically collected because the WDM apparatus does not have a function of receiving different SV wavelengths.

The third problem is that a process of collecting failure information of each station by an external supervisory apparatus or the like and manually analyzing a plurality of pieces of failure information is time-consuming because the WDM apparatus does not have means for periodically collecting wavelength reception discontinuity information and SV wavelength reception discontinuity information of its own station and means for periodically collecting wavelength reception discontinuity information and SV wavelength reception discontinuity information of other stations and the WDM apparatus does not have a management table for a failure in a transmission path optical fiber.

The OTDR method in Patent Document 1 or 2 is an effective and necessary means for measuring a loss fluctuation or failure distance of a transmission path optical fiber determined to have a failure. However, because this method has a limitation in that all signal outputs of a measurement path are stopped or a measurement time of several tens of minutes to several hours is necessary, there is a problem in that a communication system in service cannot constantly supervise the failure in the transmission path optical fiber.

The present invention has been made to solve the above-described problems. An object of the present invention is to provide a method of assessing a failure in a transmission path optical fiber and an apparatus for the same, which assess the failure in the transmission path optical fiber in a short time in a WDM apparatus of its own station by transmitting an SV signal in which wavelength reception discontinuity information and SV wavelength reception discontinuity information of its own station are carried in the WDM apparatus of its own station and also collecting wavelength reception discontinuity information and SV wavelength reception discontinuity of other stations in the WDM apparatus of its own station.

### Means for Solving the Problem

In order to achieve the above-described object, a method for assessing a failure in a transmission path optical fiber according to the present invention includes: detecting information on wavelength discontinuity of a signal wavelength and wavelength discontinuity of a SV wavelength of an own station, periodically transmitting the detected information to other stations, and periodically collecting, in the own station, information on wavelength discontinuity and wavelength discontinuity of an SV wavelength detected by other stations; and assessing a failure in a transmission path optical fiber based on the detected information and the collected information.

In the method for assessing a failure in a transmission path optical fiber, a failure in the transmission path optical fiber may be assessed by comparing the detected information and the collected information with a pre-stored management table for a failure in the transmission path optical fiber.

In order to achieve the above-described object, an apparatus for assessing a failure in a transmission path optical fiber according to the present invention includes: a detection unit which detects information on wavelength discontinuity of a signal wavelength and wavelength discontinuity of an SV wavelength of an own station; a transmission unit which periodically transmits the information detected by the detection unit to other stations; a collection unit which periodically receives and collects, in the own station, information on wavelength discontinuity and wavelength discontinuity of an SV wavelength detected by other stations; and an assessment unit which assesses a failure in a transmission path optical fiber based on the information detected by the detection unit and the information collected by the collection unit.

In the apparatus for assessing a failure in a transmission path optical fiber, the assessment unit may assess a failure in the transmission path optical fiber by comparing the information detected by the detection unit and the information collected by the collection unit with a pre-stored management table for a failure in the transmission path optical fiber.

### Effect of the Invention

In a method for assessing a failure in a transmission path optical fiber according to an exemplary embodiment of the present invention, a WDM apparatus transmits an SV signal in which wavelength reception discontinuity information and SV wavelength reception discontinuity information of its own station are carried and collects wavelength reception discontinuity information and SV wavelength reception discontinuity of other stations. Thus, the WDM apparatus can assess the failure in the transmission path optical fiber in a short time.

An apparatus for assessing a failure in a transmission path optical fiber according to an exemplary embodiment of the present invention has a function of detecting wavelength discontinuity of a signal wavelength and an SV wavelength and a function of transmitting wavelength discontinuity information thereof by the SV wavelength in an SV circuit of the WDM apparatus. Consequently, it is possible to periodically transmit wavelength reception discontinuity information and SV wavelength reception discontinuity information of its own station to other stations. In addition, the assessing apparatus has a function of receiving different SV wavelengths in the SV circuit of the WDM apparatus. Consequently, it is possible to periodically collect wavelength reception discontinuity information and SV wavelength reception discontinuity information of other stations. Furthermore, the assessing apparatus has means for periodically collecting wavelength reception discontinuity information and SV wavelength reception discontinuity information of its own station and means for periodically collecting wavelength reception discontinuity information and SV wavelength reception discontinuity information of other stations in the WDM apparatus. Consequently, the assessing apparatus can assess a failure in a transmission path optical fiber in a short time without manual intervention by making a comparison with a management table for the failure in the transmission path optical fiber pre-stored in the WDM apparatus.

### BRIEF DESCRIPTION OF THE DRAWINGS

FIG. 1 is an illustrative diagram showing a schematic configuration of an OADM system to which an apparatus for assessing a failure in a transmission path optical fiber according to an exemplary embodiment of the present invention is applied and showing flows of the wavelength (WG) of a transmission signal and the wavelength (SV wavelength) of a supervisory control signal.
FIG. 2 is an illustrative diagram showing flows of a transmission signal wavelength and an SV wavelength according to the exemplary embodiment of the present invention.
FIG. 3 is an illustrative diagram showing flows of a transmission signal wavelength and an SV wavelength according to the exemplary embodiment of the present invention.
FIG. 4 is an illustrative diagram showing flows of a transmission signal wavelength and an SV wavelength according to the exemplary embodiment of the present invention.
FIG. 5 is an illustrative diagram showing flows of a transmission signal wavelength and an SV wavelength according to the exemplary embodiment of the present invention.
FIG. 6 is an illustrative diagram showing flows of a transmission signal wavelength and an SV wavelength according to the exemplary embodiment of the present invention.
FIG. 7 is an illustrative diagram of a failure assessment operation according to the exemplary embodiment of the present invention.
FIG. 8 is an illustrative diagram of a failure assessment operation according to the exemplary embodiment of the present invention.
FIG. 9 is an internal configuration diagram of a WDM apparatus provided in a trunk station according to the exemplary embodiment of the present invention.
FIG. 10 is an internal configuration diagram of a WDM apparatus provided in a branch station according to the exemplary embodiment of the present invention.
FIG. 11 is a detailed diagram of an SV circuit according to the exemplary embodiment of the present invention.
FIG. 12 is an internal configuration diagram of a WDM apparatus of a related art.
FIG. 13 is an internal configuration diagram of a WDM apparatus of a related art.

### EMBODIMENT FOR CARRYING OUT THE INVENTION

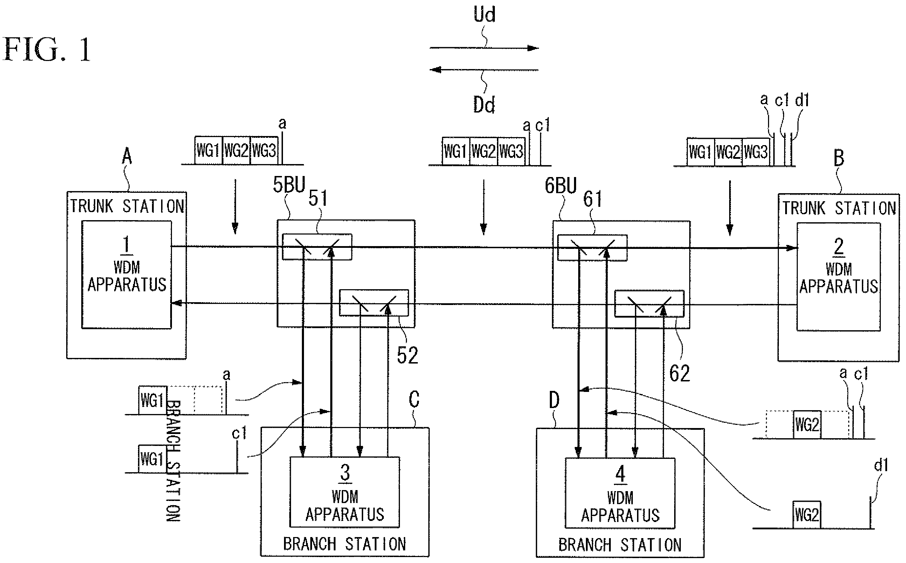

Hereinafter, an exemplary embodiment for carrying out the present invention will be described with reference to the drawings. FIG. 1 is a schematic configuration diagram of an OADM system to which an apparatus for assessing a failure in a transmission path optical fiber according to an exemplary embodiment of the present invention is applied.
In FIG. 1, trunk stations A and B, branch stations C and D, and add/drop circuits 51, 52, 61, and 62 are shown. The trunk stations A and B are installed to be separated by a predetermined distance. The branch stations C and D are provided to keep a predetermined spacing from the two trunk stations A and B. The add/drop circuits 51, 52, 61, and 62 include an optical coupler, an optical filter, or the like. A transmission direction from the trunk station A to the trunk station B is defined as an upstream direction (up direction Ud). A transmission direction from the trunk station B to the trunk station A is defined as a downstream direction (down direction Dd). WDM apparatuses 1, 2, 3, and 4 are respectively provided in the trunk stations A and B and the branch stations C and D.

The branch station C of the branch stations C and D is connected to a transmission path via a branch unit 5BU. That is, the branch unit 5BU is connected to the up direction Ud of the transmission direction via the add/drop circuit 51, and is also connected to the down direction Dd via the add/drop circuit 52. The branch station D is connected to the up direction Ud of the transmission direction via the add/drop circuit 61, and is also connected to the down direction Dd via the add/drop circuit 62.

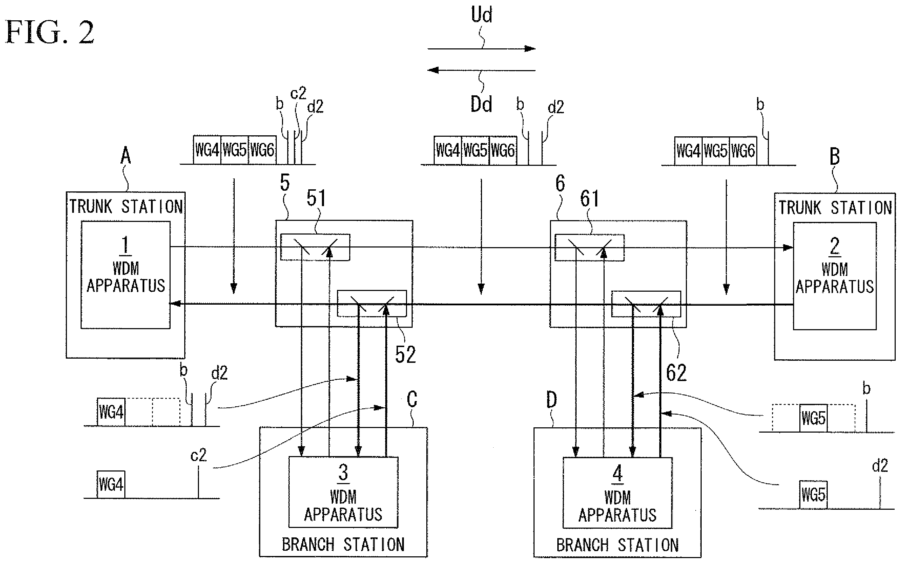

In FIG. 1 described above and FIGS. 2 to 6, flows of a wavelength WG of a transmission signal and an SV wavelength of a supervisory control signal (SV signal) are shown.

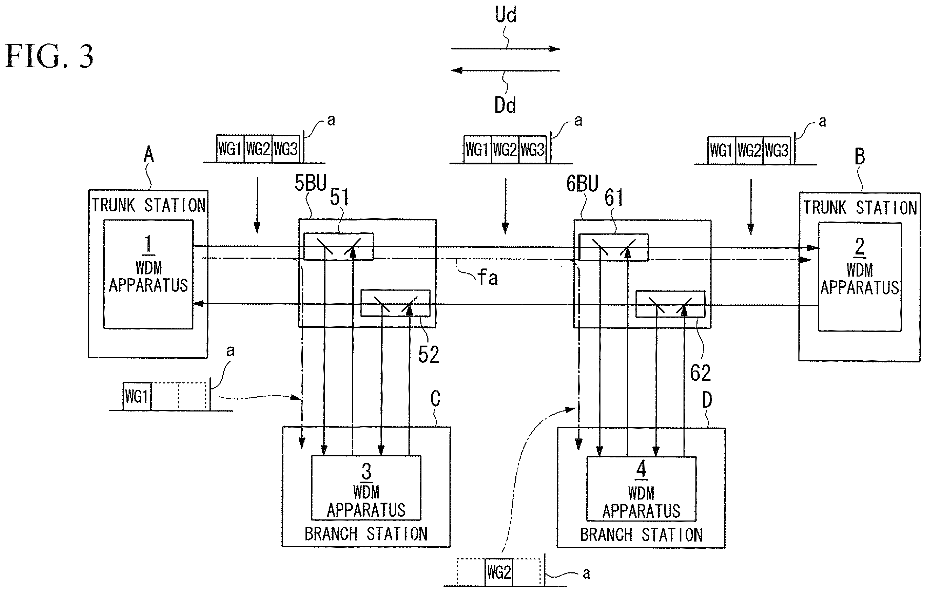

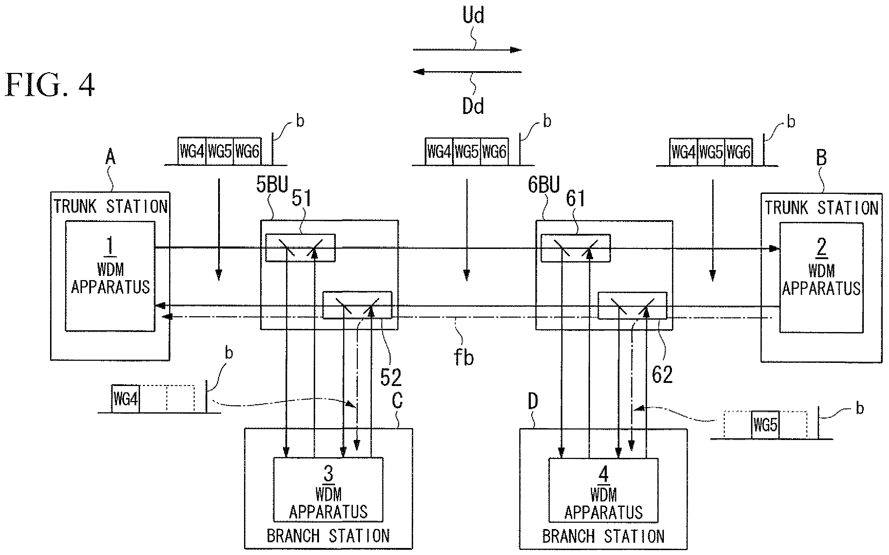

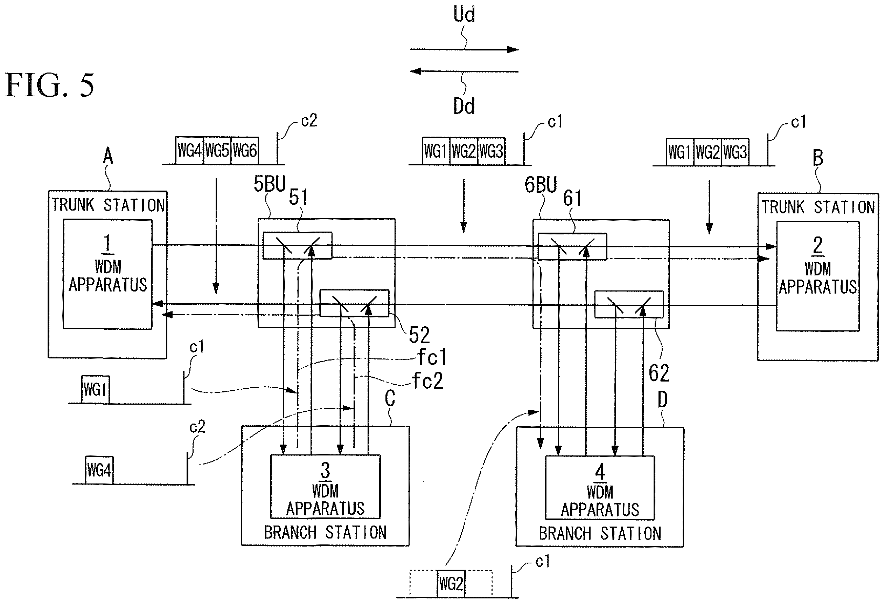

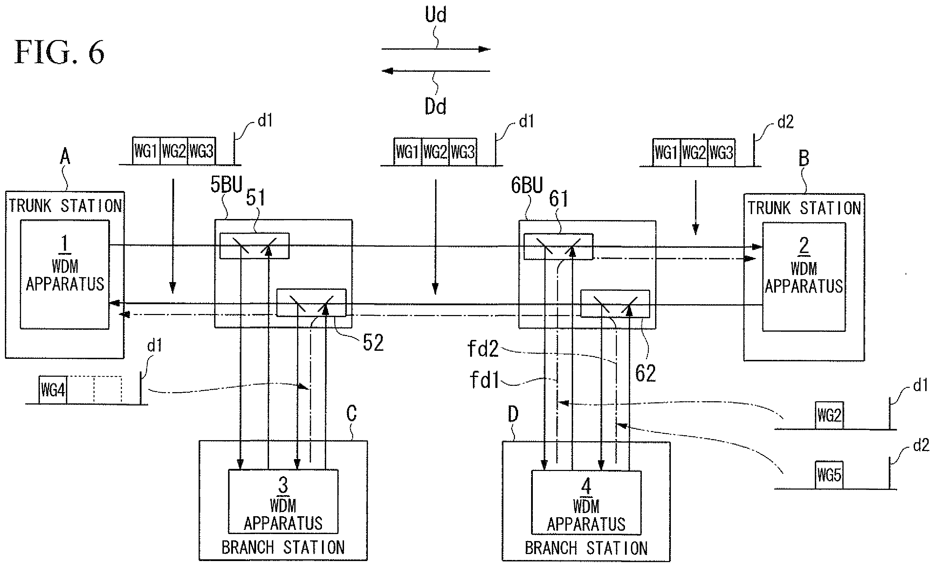

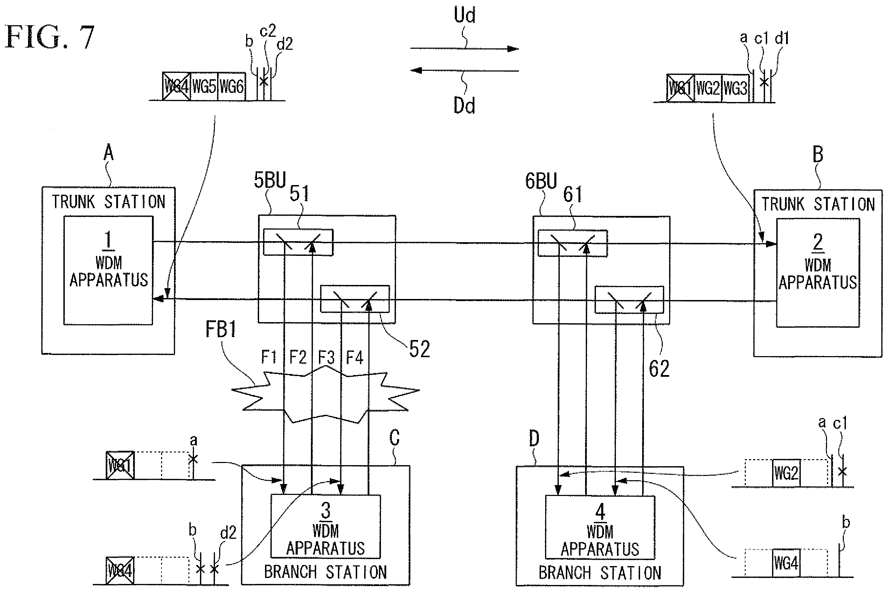

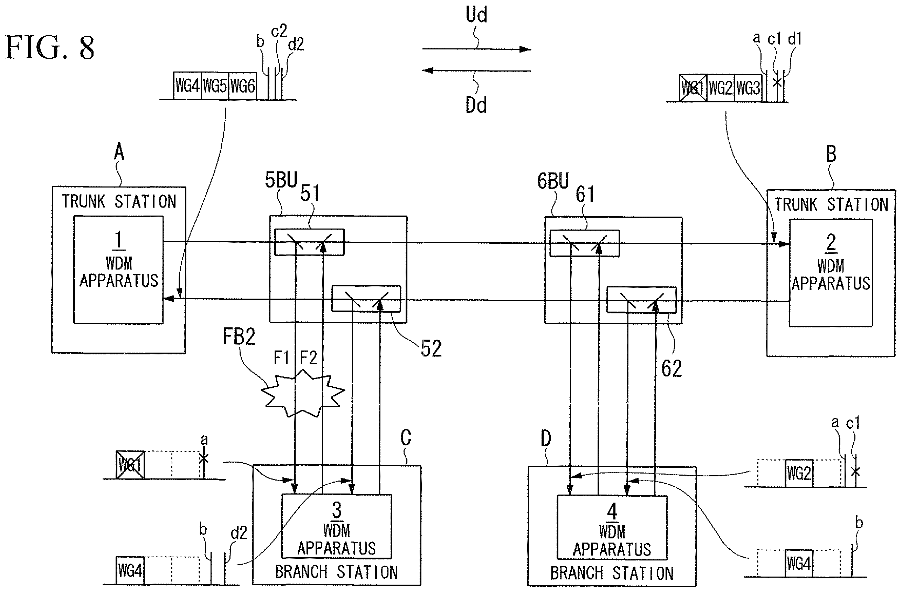

FIG. 2 shows a configuration of an OADM system that drops/adds some wavelength groups among wavelength groups WG4, WG5, and WG6, passing through from the trunk station B to the trunk station A (in the down direction Dd), between the branch units 5BU and 6BU and the branch stations C and D, and flows of main signals. FIG. 3 shows an SV signal flow in which an SV (supervisory) signal of a single wavelength a different from wavelength groups WG1 to WG6 is transmitted from the trunk station A to all other stations (a dashed dotted line fa indicates the flow of the SV signal of the single wavelength a). FIG. 4 shows an SV signal flow in which an SV signal of a single wavelength b different from the wavelength groups WG1 to WG6 is transmitted from the trunk station B to all other stations (a dashed dotted line fb indicates the flow of the SV signal of the single wavelength b). FIG. 5 shows SV signal flows in which SV signals of single wavelengths c1 and c2 different from the wavelength groups WG1 to WG6 are transmitted from the branch station C to all other stations (dashed dotted lines fc1 and fc2 respectively indicate the flows of the SV signals of the single wavelengths c1 and c2). FIG. 6 shows SV signal flows in which SV signals of single wavelengths d1 and d2 different from the wavelength groups WG1 to WG6 are transmitted from the branch station D to all other stations (dashed dotted lines fd1 and fd2 respectively indicate the flows of the SV signals of the single wavelengths d1 and d2). In FIGS. 3 to 6, wavelength discontinuity information collected by WDM apparatuses of the other stations is carried in the transmitted SV signals. FIGS. 7 and 8 show the same configurations as FIGS. 1 to 6, and a failure assessment operation will be described later using these drawings.

From FIGS. 1 to 6, it is possible to easily understand the flows of the wavelength WG of the transmission signal and the SV wavelength of the supervisory control signal. The flows of the wavelength WG of the transmission signal and the SV wavelength of the supervisory control signal will be simply described using FIGS. 1 and 2. The WDM apparatus 1 of the trunk station A can transmit the wavelength groups WG1, WG2, and WG3 and the SV wavelength a of the supervisory control signal to the up direction Ud (see FIG 1), and receive the wavelength groups WG4, WG5, and WG6 and the SV wavelengths b, c2, and d from the down direction Dd (see FIG. 2).

The WDM apparatus 2 of the trunk station B can transmit the wavelength groups WG4, WG5, and WG6 and the SV wavelength b to the down direction Dd (see FIG. 2), and receive the wavelength groups WG1, WG2, and WG3 and the SV wavelengths a, c1, and d1 from the up direction Ud (see FIG. 1).

The WDM apparatus 3 of the branch station C can transmit the wavelength group WG1 and the SV wavelength c1 to the up direction Ud, and receive the wavelength group WG1 and the SV wavelength a from the up direction Ud (see FIG. 1). Also, the WDM apparatus 3 of the branch station C can transmit the wavelength group WG4 and the SV wavelength c2 to the down direction Dd, and receive the wavelength group WG4 and the SV wavelengths b and d2 from the down direction Dd (see FIG. 2).

The WDM apparatus 4 of the branch station D can transmit the wavelength group WG2 and the SV wavelength d1 to the up direction Ud, and receive the wavelength group WG2 and the SV wavelengths a and c1 from the up direction Ud (see FIG. 1). Also, the WDM apparatus 4 of the branch station D can transmit the wavelength group WG5 and the SV wavelength d2 to the down direction Dd, and receive the wavelength group WG5 and the SV wavelength b from the down direction Dd (see FIG. 2).

By the add/drop circuit 51, the above-described branch unit 5BU outputs (or drops) the wavelength group WG1 and the SV wavelength a from the WDM apparatus 1 to the WDM apparatus 3, and multiplexes (or adds) the wavelength group WG1 and the SV wavelength c1 from the WDM apparatus 3 and the wavelength groups WG2 and WG3 and the SV wavelength a after the removal of the wavelength group WG1 from the WDM apparatus 1, and outputs them to the branch unit 6BU.

Also, by the add/drop circuit 52, the branch unit 5BU outputs (or drops) the wavelength group WG4 and the SV wavelengths b and d2 from the branch unit 6BU to the WDM apparatus 3, and multiplexes (or adds) the wavelength group WG4 and the SV wavelength c2 from the WDM apparatus 3 and the wavelength groups WG5 and WG6 and the SV wavelengths b and d2 after the removal of the wavelength group WG4 from the branch unit 6BU, and outputs them to the WDM apparatus 1.

By the add/drop circuit 61, the branch unit 6BU outputs (or drops) the wavelength group WG2 and the SV wavelengths a and c1 from the branch unit 5BU to the WDM apparatus 4, and multiplexes (or adds) the wavelength group WG2 and the SV wavelength d1 from the WDM apparatus 4 and the wavelength groups WG1 and WG3 and the SV wavelengths a and c1 after the removal of the wavelength group WG2 from the branch unit 5BU, and outputs them to the WDM apparatus 2.

Also, by the add/drop circuit 62, the branch unit 6BU outputs (or drops) the wavelength group WG5 and the SV wavelength b from the WDM apparatus 2 to the WDM apparatus 4, and multiplexes (or adds) the wavelength group WG5 and the SV wavelength d2 from the WDM apparatus 4 and the wavelength groups WG4 and WG6 and the SV wavelength b after the removal of the wavelength group WG5 from the WDM apparatus 2, and outputs them to the branch unit 5BU.

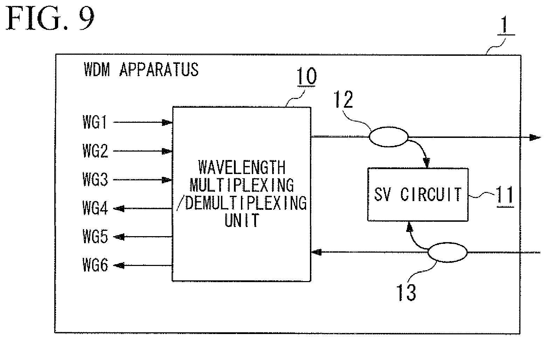

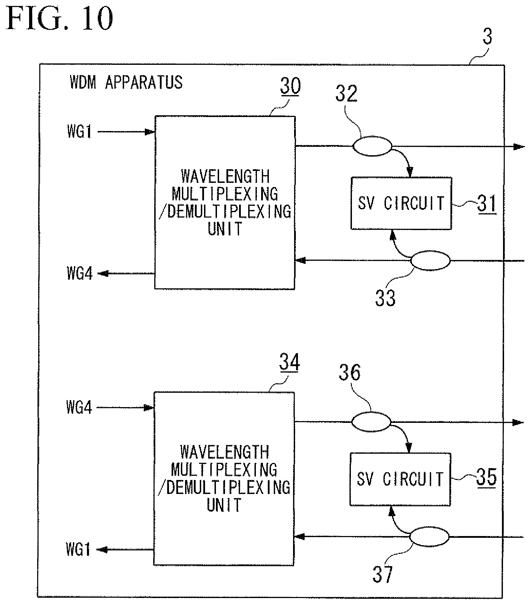

FIG. 9 shows an internal configuration of the WDM apparatus 1 provided in the trunk station A. The WDM apparatus 2 provided in the trunk station B also has the same configuration as the WDM apparatus 1. FIG. 10 shows an internal configuration of the WDM apparatus 4 provided in the branch station C. The WDM apparatus 4 provided in the branch station D also has the same configuration.

As shown in FIG. 9, the WDM apparatus 1 has a wavelength multiplexing/demultiplexing unit 10, an SV circuit 11, and branching units 12 and 13. The wavelength multiplexing/demultiplexing unit 10 wavelength-multiplexes the wavelength groups WG1, WG2, and WG3, and wavelength-demultiplexes the wavelength groups WG4, WG5, and WG6. The branching unit 12 outputs the wavelength-multiplexed WG1, WG2, and WG3 to other apparatuses, and also branches them into the SV circuit 11. The branching unit 13 branches an input wavelength group and SV wavelength into the wavelength multiplexing/demultiplexing unit 10 and the SV circuit 11.

As shown in FIG. 10, the WDM apparatus 3 has a wavelength multiplexing/demultiplexing unit 30, an SV circuit 31, and branching units 32 and 33. The wavelength multiplexingldemultiplexing unit 30 wavelength-multiplexes the wavelength group WG1 and wavelength-demultiplexes the wavelength group WG4. The branching unit 32 outputs the wavelength-multiplexed WG1 to other apparatuses, and also branches the wavelength-multiplexed WG1 to the SV circuit 31. The branching unit 33 branches an input wavelength group and SV wavelength into the wavelength multiplexing/demultiplexing unit 30 and the SV circuit 31.

Furthermore, the WDM apparatus 3 has a wavelength multiplexing/demultiplexing unit 34, an SV circuit 35, and branching units 36 and 37. The wavelength multiplexing/demultiplexing unit 34 wavelength-multiplexes the wavelength group WG4 and wavelength-demultiplexes the wavelength group WG1. The branching unit 36 outputs the wavelength-multiplexed WG4 to other apparatuses, and also branches it to the SV circuit 35. The branching unit 37 branches an input wavelength group and SV wavelength into the wavelength multiplexing/demultiplexing unit 34 and the SV circuit 35.

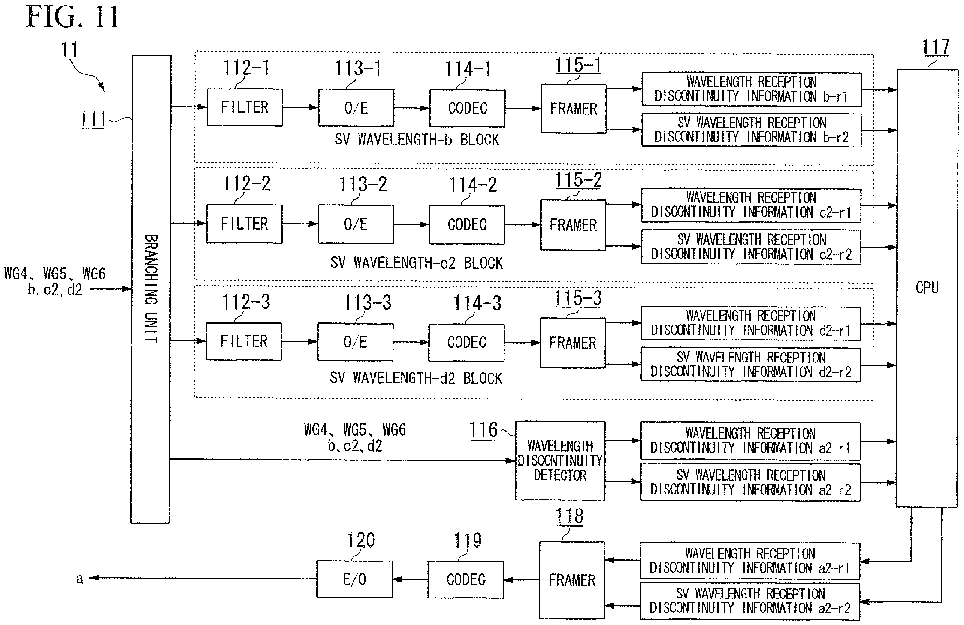

FIG. 11 shows an internal configuration of the above-described SV circuits 11, 30, and 35. Here, the SV circuit 11 shown in FIG. 11 will be described as an example. The SV circuit 11 includes a detection unit, a transmission unit, a collection unit, and an assessment unit.

In FIG. 11, a branching unit 111 branches wavelength groups and SV wavelengths into filters 112-1 to 112-3 and a wavelength discontinuity detector 116 to be described later.

The filter 112-1 extracts only the SV wavelength b. An O/E 113-1 performs optical/electrical conversion on the SV wavelength b. A CODEC 114-1 decodes encoded data. A framer 115-1 extracts, from the decoded data, wavelength reception discontinuity information b-r1 and SV wavelength reception discontinuity information b-r2 of the WDM apparatus 2 (the trunk station B) transmitted by the SV wavelength b.

The filter 112-2 extracts only the SV wavelength c2. An O/E 113-2 performs optical/electrical conversion on the SV wavelength c2. A CODEC 114-2 decodes encoded data. A framer 115-2 extracts, from the decoded data, wavelength reception discontinuity information c2-r1 and SV wavelength reception discontinuity information c2-r2 of the WDM apparatus 3 (the branch station C) transmitted by the SV wavelength c2.

The filter 112-3 extracts only the SV wavelength d2. An O/E 113-3 performs optical/electrical conversion on the SV wavelength d2. A CODEC 114-3 decodes encoded data. A framer 115-3 extracts, from the decoded data, wavelength reception discontinuity information d2-r1 and SV wavelength reception discontinuity information d2-r2 of the WDM apparatus 4 (the branch station D) transmitted by the SV wavelength d2.

The wavelength discontinuity detector 116 detects the presence/absence of wavelengths of the wavelength groups WG4, WG5, and WG6 and the SV wavelengths b, c2, and d2 input to its own station, and extracts wavelength reception discontinuity information a2-r1 and SV wavelength reception discontinuity information a2-r2.

A CPU 117 assesses a failure by comparing extracted wavelength reception discontinuity information and SV wavelength reception discontinuity information of its own station and other stations with a pre-stored management table for a failure in a transmission path optical fiber.

A framer 118 generates a frame in which the wavelength reception discontinuity information a2-r1 and the SV wavelength reception discontinuity information a2-r2 are transmitted to other stations. A CODEC 119 encodes data. An E/O 120 performs electrical/optical conversion on the SV wavelength a.

Hereinafter, a failure assessment operation of this exemplary embodiment will be described using FIGS. 7 and 8. FIG. 7 shows a failure in a transmission path optical fiber when fibers F1, F2, F3, and F4 have been simultaneously disconnected (see reference number FB1).

If the failure in the transmission path optical fiber has occurred as described above, the WDM apparatus 1 detects a disconnection of the wavelength group WG4 and a disconnection of the SV wavelength c2 by the SV circuit 11 of its own station. Also, the WDM apparatus 1 transmits, by the SV wavelength a, wavelength reception discontinuity information and SV wavelength reception discontinuity information of the WDM apparatus 1 to the WDM apparatuses 2 and 4. The information is not transmitted to the WDM apparatus 3 due to the failure in the transmission path optical fiber.

The WDM apparatus 2 detects a disconnection of the wavelength group WG1 and a disconnection of the SV wavelength c1 by the SV circuit 11 of its own apparatus. Also, the WDM apparatus 2 transmits, by the SV wavelength b, wavelength reception discontinuity information and SV wavelength reception discontinuity information of the WDM apparatus 2 to the WDM apparatuses 1 and 4. The information is not transmitted to the WDM apparatus 3 due to the failure in the transmission path optical fiber.

The WDM apparatus 3 detects disconnections of the wavelength groups WG1 and WG4 and disconnections of the SV wavelengths a, b, and d2 by the SV circuit of its own apparatus. The information is not transmitted to the WDM apparatuses 1, 2, and 4 due to the failure in the transmission path optical fiber.

The WDM apparatus 4 detects a disconnection of the SV wavelength c1 by the SV circuit of its own apparatus. Also, the WDM apparatus 4 transmits, by the SV wavelengths d1 and d2, wavelength reception discontinuity information and SV wavelength reception discontinuity information of the WDM apparatus 4 to the WDM apparatuses 1 and 2 by the SV wavelengths d1 and d2. The information is not transmitted to the WDM apparatus 3 due to the failure in the transmission path optical fiber.

States of the above-described reception discontinuity information are summarized in Table 1.

**[Table 1]**

| | Wavelength Reception Discontinuity Information | | | | | | SV Wavelength Reception Discontinuity Information | | | | | |
|---|---|---|---|---|---|---|---|---|---|---|---|---|
| | Direction: Trunk Station A→B | | | Direction: Trunk Station B→A | | | Direction: Trunk Station A→B | | | Direction: Trunk Station B→A | | |
| Station (Apparatus) | WG1 | WG2 | WG3 | WG4 | WG5 | WG6 | a | c1 | d1 | b | c2 | d2 |
| Trunk Station A (WDM Apparatus 1) | | | | O | - | - | | | | - | O | - |
| Trunk Station B (WDM Apparatus 2) | O | - | - | | | | - | O | - | | | |
| Branch Station C (WDM Apparatus 3) | O | | | O | | | O | | | O | | O |
| Branch Station D (WDM Apparatus 4) | | - | | | - | | - | O | | - | | |

As described above, because the WDM apparatuses 1, 2, and 4 can collect wavelength reception discontinuity information and SV wavelength reception discontinuity information other than those of the WDM apparatus 3 of Table 1, it is possible to assess that the failure has occurred in the transmission path optical fiber between the branch unit 5BU and the branch station C by pre-inputting a management table of wavelength reception discontinuity information and SV wavelength reception discontinuity information during each failure to the CPU within the SV circuit and by comparing the table with acquired data. It is possible to assess a failure in a transmission path optical fiber if, like the WDM apparatus 3, a condition in which all wavelength groups and SV wavelengths to be received from other stations are discontinuous is input to the management table of the CPU within the SV circuit as a failure in a transmission path optical fiber between the branch unit 5BU and the branch station C.

FIG. 8 shows a failure in a transmission path optical fiber when fibers F1 and F2 have been simultaneously disconnected (see reference symbol FB2).

If the failure in the transmission path optical fiber has occurred as described above, the WDM apparatus 1 does not detect wavelength reception discontinuity and SV wavelength reception discontinuity. Also, the WDM apparatus 1 transmits, by the SV wavelength a, wavelength reception discontinuity information and SV wavelength reception discontinuity information of the WDM apparatus 1 to the WDM apparatuses 2 and 4. The information is not transmitted to the WDM apparatus 3 due to the failure in the fiber.

The WDM apparatus 2 detects a disconnection of the wavelength group WG1 and a disconnection of the SV wavelength c1 by the SV circuit of its own apparatus. Also, the WDM apparatus 2 transmits, by the SV wavelength b, wavelength reception discontinuity information and SV wavelength reception discontinuity information of the WDM apparatus 2 to the WDM apparatuses 1, 3, and 4.

The WDM apparatus 3 detects a disconnection of the wavelength group WG1 and a disconnection of the SV wavelength a by the SV circuit of its own apparatus. Also, the WDM apparatus 3 transmits, by the SV wavelength c2 wavelength reception discontinuity information and SV wavelength reception discontinuity information of the WDM apparatus 3 to the WDM apparatus 1. The information is not transmitted to the WDM apparatuses 2 and 4 due to the failure in the fiber.

The WDM apparatus 4 detects a disconnection of the SV wavelength c1 by the SV circuit of its own apparatus. Also, the WDM apparatus 4 transmits, by the SV wavelengths d1 and d2, wavelength reception discontinuity information and SV wavelength reception discontinuity information of the WDM apparatus 4 to the WDM apparatuses 1, 2, and 3.

States of the above-described reception discontinuity information are summarized in Table 2.

**[Table 2]**

| | Wavelength Reception Discontinuity Information | | | | | | SV Wavelength Reception Discontinuity Information | | | | | |
|---|---|---|---|---|---|---|---|---|---|---|---|---|
| | Direction: Trunk Station A→B | | | Direction: Trunk Station B→A | | | Direction: Trunk Station A→B | | | Direction: Trunk Station B→A | | |
| Station (Apparatus) | WG1 | WG2 | WG3 | WG4 | WG5 | WG6 | a | c1 | d1 | b | c2 | d2 |
| Trunk Station A (WDM Apparatus 1) | | | | - | - | - | | | | - | - | - |
| Trunk Station B (WDM Apparatus 2) | O | - | - | | | | - | O | - | | | |
| Branch Station C (WDM Apparatus 3) | O | | | - | | | O | | | - | | - |
| Branch Station D (WDM Apparatus 4) | | - | | | - | | - | O | | - | | |

As described above, the WDM apparatus 1 can collect wavelength reception discontinuity information and SV wavelength reception discontinuity information of all the apparatuses of Table 2. The WDM apparatus 2 can collect wavelength reception discontinuity information and SV wavelength reception discontinuity information other than those of the WDM apparatus 3 of Table 2. The WDM apparatus 3 can collect wavelength reception discontinuity information and SV wavelength reception discontinuity information other than those of the WDM apparatus 1 of Table 2. The WDM apparatus 4 can collect wavelength reception discontinuity information and SV wavelength reception discontinuity information other than those of the WDM apparatus 3 of Table 2. Therefore, it is possible to assess that the failure has occurred in the fibers F1 and F2 between the branch unit 5BU and the branch station C by pre-inputting a management table of wavelength reception discontinuity information and SV wavelength reception discontinuity information during each failure to the CPU within the SV circuit and comparing the table with acquired data.

As described above, because wavelength reception discontinuity information or SV wavelength reception discontinuity information collected by each apparatus is different according to a failure position of the transmission path optical fiber, the WDM apparatus of each station can assess a failure in the transmission path optical fiber.

The apparatus for assessing a failure in a transmission path optical fiber configured as described above has a function of detecting wavelength discontinuity of a signal wavelength and an SV wavelength and a function of transmitting wavelength discontinuity information thereof by the SV wavelength in an SV circuit of the WDM apparatus, thereby periodically transmitting wavelength reception discontinuity information and SV wavelength reception discontinuity information of its own station to other stations. Also, the apparatus for assessing the failure in the transmission path optical fiber has a function of receiving different SV wavelengths in the SV circuit of the WDM apparatus, thereby periodically collecting wavelength reception discontinuity information and SV wavelength reception discontinuity information of other stations. Furthermore, the apparatus for assessing the failure in the transmission path optical fiber has means for periodically collecting wavelength reception discontinuity information and SV wavelength reception discontinuity information of its own station and means for periodically collecting wavelength reception discontinuity information and SV wavelength reception discontinuity information of other stations in the WDM apparatus, thereby assessing the failure in the transmission path optical fiber in a short time without manual intervention by making a comparison with a management table for the failure in the transmission path optical fiber pre-stored in the WDM apparatus.

Although the exemplary embodiment of the present invention have been described above with reference to the drawings, specific configurations are not limited to the above-described exemplary embodiment and various design changes may be made without departing from the scope of the present invention.

For example, although the two branch stations C and D are provided between the two trunk stations A and B in the above-described example, the number of branch stations may be one, or three or more.

This application is based upon and claims the benefit of priority from Japanese Patent Application No. 2009-050861, filed March 4, 2009, the disclosure of which is incorporated in its entirety by reference.

### INDUSTRIAL APPLICABILITY

The present invention is applicable to a method of assessing a failure in a transmission path optical fiber and an apparatus for the same. According to the method of assessing the failure in the transmission path optical fiber, it is possible to assess the failure in the transmission path optical fiber in a short time in a WDM apparatus of its own station by transmitting an SV signal in which wavelength reception discontinuity information and SV wavelength reception discontinuity information of its own station are carried in the WDM apparatus of its own station and also collecting wavelength reception discontinuity information and SV wavelength reception discontinuity of other stations in the WDM apparatus of its own station.

### Reference Symbols

- A, B: Trunk station
- C, D: Branch station
- 1, 2, 3, 4: WDM apparatus
- 5BU, 6BU: Branch unit
- 51, 52, 61, 62: Add/drop circuit
- 10, 30, 34: Wavelength multiplexing/demultiplexing unit
- 11, 31, 35: SV circuit
- 12, 13, 32, 33, 36, 37: Branching unit

## Claims

1. A method for assessing a failure in a transmission path optical fiber connected to first to fourth stations (A,C,D,B), the method being **characterized by**:
Detecting, by the third station (D), information on whether inputs of a signal wavelength and a plurality of supervisory wavelengths to the third station are present or absent, the plurality of supervisory wavelengths including a first supervisory wavelength transmitted from the first station (A) and a second supervisory wavelength transmitted from the second station (C), the first and second supervisory wavelengths being different from each other;
periodically transmitting, by the third station (D), the detected information to the fourth station (B), ;
periodically receiving and collecting, by the third station (D), through the plurality of supervisory wavelengths, information on whether inputs of a signal wavelengths and supervisory wavelengths are present or absent at the first and second stations (A,C) and
assessing, by the third station (D), a failure in a transmission path optical fiber based on the detected information and the collected information.

2. The method for assessing a failure in a transmission path optical fiber according to claim 1, wherein a failure in the transmission path optical fiber is assessed by comparing the detected information and the collected information with a pre-stored management table for assessing a failure in the transmission path optical fiber.

3. An apparatus (4) for assessing a failure in a transmission path optical fiber connected to first to fourth stations (A,C,D,B), the apparatus being **characterized by**:
a detection unit (11, 30, 35) adapted to detect information on whether inputs of a signal wavelength and a plurality of supervisory wavelengths to the third station (D) are present or absent, the plurality of supervisory wavelengths including a first supervisory wavelength transmitted from the first station (A) and a second supervisory wavelength transmitted from the second station (C), the first and second supervisory wavelengths being different from each other;
a transmission unit (11, 30, 35) adapted to periodically transmit the information detected by the detection unit to the fourth station (B);
a collection unit (11, 30, 35) adapted to periodically receive and collect through the plurality of supervisory wavelengths, information on whether inputs of a signal wavelength and and supervisory wavelengths are present or absent at the first and second stations (A,C) and
an assessment unit (11, 30, 35) adapted to assess a failure in a transmission path optical fiber based on the information detected by the detection unit and the information collected by the collection unit.

4. The apparatus for assessing a failure in a transmission path optical fiber according to claim 3, wherein the assessment unit is adapted to assess a failure in the transmission path optical fiber by comparing the information detected by the detection unit and the information collected by the collection unit with a pre-stored management table for assessing a failure in the transmission path optical fiber.

5. The apparatus for assessing a failure in a transmission path optical fiber according to claim 3, wherein the transmission unit, the collection unit, and the assessment unit are provided in a supervisory circuit of a WDM apparatus of the third station.

6. The apparatus for assessing a failure in a transmission path optical fiber according to claim 4, wherein the transmission unit, the collection unit, and the assessment unit are provided in a supervisory circuit of a WDM apparatus of the third station.

## Patentansprüche

1. Verfahren zum Bewerten eines Fehlers in einer Übertragungspfadoptikfaser, die mit ersten bis vierten Stationen (A, C, D, B) verbunden ist, wobei das Verfahren **gekennzeichnet ist durch**:
Erfassen von Information **durch** die dritten Station (D) darüber, ob Eingaben einer Signalwellenlänge und einer Mehrzahl von Überwachungswellenlängen an die dritte Station vorhanden oder abwesend sind, wobei die Mehrzahl von Überwachungswellenlängen eine erste Überwachungswellenlänge, die von der ersten Station (A) übertragen wird, und eine zweite Überwachungswellenlänge, die von der zweiten Station (C) übertragen wird, enthalten, wobei die erste und zweite Überwachungswellenlänge verschieden voneinander sind;
periodisches Übertragen der erfassten Information **durch** die dritte Station (D) an die vierte Station (B);
periodisches Empfangen und Sammeln, von der dritten Station (D) **durch** die Mehrzahl von Überwachungswellenlängen, von Information darüber, ob Eingaben von einer Signalwellenlänge und von Überwachungswellenlängen an der ersten und zweiten Station (A, C) vorhanden oder abwesend sind,
Bewerten, **durch** die dritte Station (D), eines Fehlers in einer Übertragungspfadoptikfaser basierend auf der erfassten Information und der gesammelten Information.

2. Verfahren zum Bewerten eines Fehlers in einer Übertragungspfadoptikfaser nach Anspruch 1, wobei ein Fehler in der Übertragungspfadoptikfaser durch Vergleichen der erfassten Information und der gesammelten Information mit einer vorgespeicherten Verwaltungstabelle zum Bewerten eines Fehlers in der Übertragungspfadoptikfaser bewertet wird.

3. Vorrichtung (4) zum Bewerten eines Fehlers in einer Übertragungspfadoptikfaser, die mit ersten bis vierten Stationen (A, C, D, B) verbunden ist, wobei die Vorrichtung **gekennzeichnet ist durch**:
eine Erfassungseinheit (11, 30, 35), die dazu ausgelegt ist, Information darüber zu erfassen, ob Eingaben einer Signalwellenlänge und einer Mehrzahl von Überwachungswellenlängen an der dritten Station (D) vorhanden oder abwesend sind, wobei die Mehrzahl von Überwachungswellenlängen eine erste Überwachungswellenlänge enthalten, die von der ersten Station (A) übertragen ist, und eine zweite Überwachungswellenlänge, die von der zweiten Station (C) übertragen ist, wobei die erste und zweite Übertragungswellenlänge voneinander verschieden sind;
eine Übertragungseinheit (11, 30, 35), die dazu ausgelegt ist, die Information, die von der Erfassungseinheit an der vierten Station (B) erfasst ist, periodisch zu übertragen;
eine Sammeleinheit (11, 30, 35), die dazu ausgelegt ist, Information darüber, ob Eingaben einer Signalwellenlänge und von Überwachungswellenlängen an der ersten und zweiten Station (A, C) vorhanden oder abwesend sind, **durch** die Mehrzahl von Überwachungswellenlängen periodisch zu empfangen und zu sammeln, und
eine Bewertungseinheit (11, 30, 35), die dazu ausgelegt ist, einen Fehler in einer Übertragungspfadoptikfaser basierend auf der Information, die von der Erfassungseinheit erfasst ist, und der Information, die von der Sammeleinheit gesammelt ist, zu bewerten.

4. Vorrichtung zum Bewerten eines Fehlers in einer Übertragungspfadoptikfaser nach Anspruch 3, wobei die Bewertungseinheit dazu ausgelegt ist, einen Fehler in der Übertragungspfadoptikfaser durch Vergleichen von Information, die von der Erfassungseinheit erfasst ist, und der Information, die von der Sammeleinheit gesammelt ist, mit einer vorgespeicherten Verwaltungstabelle zum Bewerten eines Fehlers in der Übertragungspfadoptikfaser zu bewerten.

5. Vorrichtung zum Bewerten eines Fehlers in einer Übertragungspfadoptikfaser nach Anspruch 3, wobei die Übertragungseinheit, die Sammeleinheit und die Bewertungseinheit in einem Überwachungskreis einer WDM Vorrichtung der dritten Station bereitgestellt sind.

6. Vorrichtung zum Bewerten eines Fehlers in einer Übertragungspfadoptikfaser nach Anspruch 4, wobei die Übertragungseinheit, die Sammeleinheit und die Bewertungseinheit in einem Überwachungskreis einer WDM Vorrichtung der dritten Station bereitgestellt sind.

## Revendications

1. Procédé pour évaluer une défaillance dans une fibre optique de chemin de transmission connectée à des première à quatrième stations (A, C, D, B), le procédé étant **caractérisé par** :
la détection, par la troisième station (D), d'informations quant au fait que des entrées d'une longueur d'onde de signal et d'une pluralité de longueurs d'onde de supervision vers la troisième station sont présentes ou absentes, la pluralité de longueurs d'onde de supervision incluant une première longueur d'onde de supervision transmise à partir de la première station (A), et une seconde longueur d'onde de supervision transmise à partir de la deuxième station (C), les première et seconde longueurs d'onde de supervision étant différentes l'une de l'autre ;
la transmission périodique, par la troisième station (D), des informations détectées à la quatrième station (B) ;
la réception et la collecte périodiques, par la troisième station (D), par l'intermédiaire de la pluralité de longueurs d'onde de supervision, d'informations quant au fait que des entrées d'une longueur d'onde de signal et de longueurs d'onde de supervision sont présentes ou absentes au niveau des première et deuxième stations (A, C), et
l'évaluation, par la troisième station (D), d'une défaillance dans une fibre optique de chemin de transmission sur la base des informations détectées et des informations collectées.

2. Procédé pour évaluer une défaillance dans une fibre optique de chemin de transmission selon la revendication 1, dans lequel une défaillance dans la fibre optique de chemin de transmission est évaluée par la comparaison des informations détectées et des informations collectées avec une table de gestion préstockée pour évaluer une défaillance dans la fibre optique de chemin de transmission.

3. Appareil (4) pour évaluer une défaillance dans une fibre optique de chemin de transmission connectée à des première à quatrième stations (A, C, D, B), l'appareil étant **caractérisé par** :
une unité de détection (11, 30, 35) adaptée pour détecter des informations quant au fait que des entrées d'une longueur d'onde de signal et d'une pluralité de longueurs d'onde de supervision vers une troisième station (D) sont présentes ou absentes, la pluralité de longueurs d'onde de supervision incluant une première longueur d'onde de supervision transmise à partir de la première station (A), et une seconde longueur d'onde de supervision transmise à partir de la deuxième station (C), les première et seconde longueurs d'onde de supervision étant différentes l'une de l'autre ;
une unité de transmission (11, 30, 35) adaptée pour transmettre périodiquement des informations détectées par l'unité de détection à la quatrième station (B) ;
une unité de collecte (11, 30, 35) adaptée pour recevoir et collecter périodiquement par l'intermédiaire de la pluralité de longueurs d'onde de supervision, des informations quant au fait que des entrées d'une longueur d'onde de signal et de longueurs d'onde de supervision sont présentes ou absentes au niveau des première et deuxième stations (A, C), et
une unité d'évaluation (11, 30, 35) adaptée pour évaluer une défaillance dans une fibre optique de chemin de transmission sur la base des informations détectées par l'unité de détection et des informations collectées par l'unité de collecte.

4. Appareil pour évaluer une défaillance dans une fibre optique de chemin de transmission selon la revendication 3, dans lequel l'unité d'évaluation est adaptée pour évaluer une défaillance dans la fibre optique de chemin de transmission par comparaison des informations détectées par l'unité de détection et des informations collectées par l'unité de collecte avec une table de gestion préstockée pour évaluer une défaillance dans la fibre optique de chemin de transmission.

5. Appareil pour évaluer une défaillance dans une fibre optique de chemin de transmission selon la revendication 3, dans lequel l'unité de transmission, l'unité de collecte et l'unité d'évaluation sont prévues dans un circuit de supervision d'un appareil de multiplexage par répartition en longueurs d'onde (MRL) de la troisième station.

6. Appareil pour évaluer une défaillance dans une fibre optique de chemin de transmission selon la revendication 4, dans lequel l'unité de transmission, l'unité de collecte et l'unité d'évaluation sont prévues dans un circuit de supervision d'un appareil MRL de la troisième station.
